# EUROPÄISCHE PATENTANMELDUNG

(11) **EP 2 103 924 A1**
(43) Veröffentlichungstag der Anmeldung: **23.09.2009**
(21) Anmeldenummer: 08171478.4
(22) Anmeldetag: 12.12.2008
(51) Int. Cl.: G01N 21/31, G01N 21/89, G01J 3/50

(54) **Optisches Verfahren und Messvorrichtung für eine Fasern beinhaltende Bahn**

(30) Priorität: 19.03.2008 DE 102008000774
(71) Anmelder: Voith Patent GmbH, 89522 Heidenheim (DE)
(72) Erfinder: Münch, Rudolf, 89551, Königsbronn (DE)

(57) **Zusammenfassung**

Die Erfindung betrifft ein Verfahren zur optischen Erfassung und Auswertung von charakteristischen Eigenschaften, wie Störungen im Erscheinungsbild, einer Fasern, wie Zellstofffasern, beinhaltenden, insbesondere bewegten Bahn.

Das erfindungsgemäße Verfahren zur optischen Erfassung und Auswertung von charakteristischen Eigenschaften, wie Störungen im Erscheinungsbild, einer Fasern, wie Zellstofffasern, beinhaltenden, insbesondere bewegten Bahn, das zumindest die folgenden Komponenten nutzt:
ein Licht einer Lichtquelle und ein von einem lichtempfindlichen Sensor, wie einer Bildkamera, generiertes Bildsignal (60), wobei die Lichtquelle und der lichtempfindliche Sensor ein Messsystem bilden,und ein Auswertesystem,
**dadurch gekennzeichnet, dass**
die Lichtquelle zwei Lichter umfasst, ein erstes Licht mit einer ersten Farbe und ein zweites Licht mit einer zweiten, von der ersten unterschiedlichen Farbe, die mit der Fasern beinhaltenden Bahn in Wechselwirkung tritt und der mindestens eine lichtempfindliche Sensor aus den von ihm empfangenen Teilen des ersten und des zweiten Lichtes das Bildsignal generiert, aus dem das Auswertesystem die charakteristischen Eigenschaften der Fasern beinhaltenden Bahn ermitteln kann.

## Beschreibung

Die Erfindung betrifft ein Verfahren und auf eine Messvorrichtung zur optischen Erfassung und Auswertung von charakteristischen Eigenschaften, wie Störungen im Erscheinungsbild, einer Fasern, wie Zellstofffasern, beinhaltenden, insbesondere bewegten Bahn, das zumindest die folgenden Komponenten nutzt: ein Licht einer Lichtquelle und ein von einem lichtempfindlichen Sensor, wie einer Bildkamera, generiertes Bildsignal, wobei die Lichtquelle und der lichtempfindliche Sensor ein Messsystem bilden, und ein Auswertesystem.

### Stand der Technik

Im internationalen Wettbewerb verlangt der Markt, insbesondere für Massendruckpapiere, ein hohes, von den Papiernutzern wahrnehmbares Qualitätsniveau. Ein wichtiger Parameter in diesem Zusammenhang ist die Schwarzsatinage, die auch als Vergrauung bezeichnet wird.

"Satinage" bezeichnet bekanntlich das Glätten der Oberfläche eines Papiers in einem Kalander, wobei der Kalander eben eine Vorrichtung, beispielsweise eine Walze, zum Glätten von Papier ist. Durch das Satinieren, d. h. durch das mechanische Glätten, beispielsweise unter Druck und bei hoher Temperatur, ergibt sich eine bestimmte Oberflächencharakteristik des Papiers, die teils, wie eine möglichst glatte Oberfläche, erwünscht, andernteils jedoch, wie die Vergrauung, unerwünscht ist.

In dem Artikel "Einfluss der Papierzusammensetzung auf die Schwarzsatinage von SC-Papier" von H. Praast, A. Schmidt, S. Holzhey und L. Göttsching in der Zeitschrift "Das Papier", Ausgabe ipw 9/2001 wird ausgeführt, dass durch den Satinageprozess SC-Papiere (SC steht für "supercalandered") dazu neigen, überwiegend an Faserkreuzungspunkten transparent zu werden. Verstärkt durch den Druckprozess erscheinen diese Bereiche im Auflicht dunkel und geben dem Papier ein graues Aussehen. Dieser optische Summeneffekt wird Schwarzsatinage genannt.

Zur Erfassung von Messgrößen, wie der Vergrauung, werden herkömmlich insbesondere optische Messvorrichtungen eingesetzt. Verfahren zur Überwachung, in der englischen Fachsprache als "monitoring" bezeichnet, beispielsweise von Papier- und Pappebahnen, insbesondere Verfahren zur Überwachung der Schwarzsatinage, mit Hilfe von optischen bzw. lichtempfindlichen Sensoren, wie CCD-Sensoren bzw. CCD-Kameras (CCD steht für "charge coupled device") sind, wie auch nachfolgend noch gezeigt wird, somit grundsätzlich bekannt. In der Regel wird der Datenstrom der Lichtsensoren nach der Erfassung mit Hilfe eines Auswertesystems ausgewertet bzw. analysiert, wie beispielsweise mittels digitaler Signalprozessoren bzw. mit Hilfe von Softwaregestützter Bildanalyse.

In der US 5,389,789 ist beispielsweise ein tragbarer Riss-Detektor zur Detektion von Größe und Form eines Risses in einer Papierbahn einer Papiermaschine beschrieben, der eine Vielzahl von Lichtquellen und Lichtsensoren aufweist. Die Lichtsensoren können das durch einen Riss hindurch tretende Licht der Lichtquellen empfangen. Zur Bestimmung von Größe und Form eines Risses werden ein Prozessor und sog. digitale Signalverarbeitung eingesetzt, die mit einem Personalcomputer kompatibel sind. Es werden Lichtleiter und InfrarotSensoren verwendet.

Die US 4,931,657 beschreibt ein optisches System zur Online-Erfassung von Texturen einer Bahn und Textur-Sensoren, die eine Bildanalyse auf momentane von einer Video-Kamera erzeugte Bildsignale anwendet, wobei die Video-Kamera synchron mit dem Licht eines Stroboskopes arbeitet. Ein in dieser Schrift beschriebener Formationstester arbeitet mit Auflicht, während ein Schmutzzähler mit Durchlicht arbeitet.

In der US 2002/0100569 A1 sind ein System und ein Verfahren zur Messung von Papierformationseigenschaften in Echtzeit beschrieben. Licht wird von einer Lichtquelle auf die Oberfläche einer nassen Papierbahn ausgesendet und von dieser zu einer Kamera reflektiert. Ein dem reflektierten Licht entsprechendes Bild wird erzeugt und von diesem Bild abgeleitete Daten können mit anderen Prozessparametern verglichen werden, um eine Rückkoppelungsschleife zur Einstellung von Parametern des Papiererzeugungsprozesses in Echtzeit zur Verfügung zu stellen.

Ziel der optischen Messungen bzw. der Bildanalyse ist es, das Ausmaß und die Lokalisierung von optisch erfassbaren Parametern, wie eben der Schwarzsatinage, in der englischen Fachsprache gemäß der WO 2005/121446 A1 auch "blackening" genannt, quantifizierbar und Störungen ausregelbar zu machen.

Der oben zitierte Artikel beschreibt auch ein PC-basiertes Bildanalyse-System zur Erfassung der Schwarzsatinage, das eine im Auflicht beleuchtete, unbedruckte, schwarz hinterlegte Papierprobe mit einer Messfläche von etwa 10 mm mal 10 mm über eine Kamera mit Makroobjektiv aufnimmt.

Nachteilig bei den bisher genannten Ständen der Technik, insbesondere dem im oben zitierten Artikel beschriebenen Messsystem, ist es, dass Störungen im Erscheinungsbild einer Papierbahn, die wie die Vergrauung auf Transparenzeffekten, d. h. auf Opazitätsänderungen, beruhen oder durch Flüssigkeitstropfen verursachte Flecken, mit nur einer Art von Beleuchtung nicht eindeutig diagnostiziert werden können. Im Falle von Vergrauung sind nämlich z. B. im Auflicht eine dunkle Faser und eine halbtransparente Faser, die auf die Vergrauung hinweist, nahezu identisch. Weiterhin besteht ein Nachteil des in dem Artikel beschriebenen Standes der Technik darin, dass es sich um ein lediglich zu Forschungs- und Laborzwecken geeignetes Messsystem handelt, das für die Echtzeit-Erfassung im Produktionsbetrieb nicht verwendbar ist.

Die EP 1 749 930 A1 beschreibt eine Vorrichtung zum Behandeln einer Bahn aus Faserstoff, insbesondere einer Papier- oder Kartonbahn, mit einem Kalander mit mindestens einem Nip, durch den die Bahn läuft, und mit einer Sensoranordnung, die einen, vorzugsweise optischen, Schwarzsatinagesensor mit lichtempfindlichen Elementen und einer Lichtquelle aufweist, mit dessen Hilfe die Schwarzsatinage online, d. h. während der laufenden Produktion, vorzugsweise berührungsfrei, erfassbar ist. Die Lichtquelle, z. B. ein Blitz- oder Stroboskoplicht, strahlt auf die Bahn und emittiert bevorzugt Licht mit einer Wellenlänge, bei der die lichtempfindlichen Elemente ihre größte Empfindlichkeit aufweisen. Dies sei beispielsweise Licht im nahen Infrarotspektrum, zum Beispiel 830 nm, also die Spektrallinie von Halbleiterlasern, wobei man CCD-Sensoren verwenden könne, die in diesem Spektrum die höchste Empfindlichkeit aufweisen.

Laut EP 1 749 930 A1 kann man das Signal des Schwarzsatinagesensors verwenden, um einer Produktionssteuerung mitzuteilen, welcher Bereich der Bahn fehlerbehaftet ist. Vorzugsweise sind die Lichtquelle und die lichtempfindlichen Elemente auf der gleichen Seite der Bahn angeordnet, wobei ermittelt wird, wie viel Licht von der Oberfläche der Bahn reflektiert wird. Es sei günstig, wenn auf der den lichtempfindlichen Elementen gegenüberliegenden Seite der Bahn ein dunkles Objekt, vorzugsweise eine Walze, angeordnet ist, welches auftretende Lichtstrahlen wesentlich schlechter reflektiert als die Oberseite der Bahn, auf die die Lichtquelle gerichtet ist. Dadurch erhöht sich die Ansprechempfindlichkeit des Schwarzsatinagesensors. Die Lichtquelle und die lichtempfindlichen Elemente können auch auf unterschiedlichen Seiten der Bahn angeordnet sein. In diesem Fall sei die Ansprechempfindlichkeit praktisch umgekehrt, d. h. ein lichtempfindliches Element wird dann mit Licht beaufschlagt, wenn eine Schwarzsatinage aufgetreten ist. In den übrigen Bereichen sind die lichtempfindlichen Elemente durch die Bahn abgeschattet.

Die in der EP 1 749 930 A1 beschriebene Vorrichtung ist zwar zur Online-Messung geeignet, jedoch ist es auch bei dieser Vorrichtung nachteilig, dass Störungen im Erscheinungsbild einer Papierbahn, die wie die Vergrauung auf Transparenzeffekten, d. h. auf Opazitätsänderungen, beruhen oder durch Flüssigkeitstropfen verursachte Flecken, mit nur einer Art von Beleuchtung, wie oben ausgeführt, nicht bzw. zumindest nicht eindeutig diagnostiziert werden können.

Ein Erscheinungsbild einer Papierbahn ist, auch im Einklang mit dem bisher Ausgeführten, ein visuell bzw. ein optisch erfassbarer Zustand der Papierbahn. Eine Störung im Erscheinungsbild ist eine durch Menschen wahrnehmbare bzw. durch optische Messsysteme bzw. Auswertesysteme auflösbare bzw. abbildbare Abweichung von einem Soll-Erscheinungsbild, welche insbesondere einer Klassifikation durch deterministische und/oder statistische Parameter, wie "lokale Vergrauung ist aufgetreten" bzw. "lokale Vergrauung ist nicht aufgetreten", zugänglich ist. Störungen im Erscheinungsbild sind beispielsweise Transparenz-Effekte von Fasern, d.h. Opazitätsänderungen, oder durch Flüssigkeitstropfen verursachte Flecken.

### Erfindungsbeschreibung

Es besteht somit in der Papierindustrie ein Bedarf charakteristische Eigenschaften, insbesondere Störungen im Erscheinungsbild, der Bahn während der laufenden Produktion zu erfassen und auszuwerten, und vorzugsweise in Echtzeit an einen Sollwert anzugleichen, wobei diese Störungen einer eindeutigen, objektiven, messtechnisch generierbaren Bewertung bzw. Diagnose zugänglich gemacht werden müssen, um so eine Produktionssteuerung und Produktoptimierung zu erreichen.

Die Befriedigung dieses Bedarfs gelingt mit einem Verfahren gemäß Anspruch 1. Vorteilhafte Ausbildungen des Verfahrens sind in den Ansprüchen 2 bis 16 definiert. Eine dieses Verfahren implementierende Messvorrichtung ist in Anspruch 17 definiert. Eine vorteilhafte Ausbildung der Messvorrichtung ist in Anspruch 18 und 19 definiert.

Das Verfahren dient zur optischen Erfassung und Auswertung von charakteristischen Eigenschaften einer Fasern beinhaltenden Bahn. Die Bahn kann insbesondere bewegt sein, beispielsweise kann die Bahn auf bzw. mit einem Langsieb bzw. Doppelsieb einer Papier- oder Pappemaschine transportiert sein. Die Fasern können beispielsweise Zellstofffasern sein. Insbesondere kann es sich bei der Bahn um eine Papierbahn handeln. Die Papierbahn kann sich insbesondere in der Nasspartie einer Papiermaschine bewegen. Es kann auch eine Pappebahn sein. Die Fasern können auch Fasern wie Chemiefasern etc., die nicht Zellstofffasern sind, sein.

Charakteristische Eigenschaften können beispielsweise lokale Störungen im Erscheinungsbild der Bahn sein, beispielsweise Transparenz-Effekte von Fasern, d. h. Opazitätsänderungen, oder durch Flüssigkeitstropfen verursachte Flecken, unterschiede in der Massenverteilung oder dunkle Flecken.

Das Verfahren nutzt zumindest ein Licht einer Lichtquelle. Unter Licht wird eine bestimmte spektrale Zusammensetzung eines elektromagnetischen Wellenfeldes verstanden, die zumindest Frequenzanteile im für Menschen bzw. für das erfindungsgemäße nachfolgend beschriebene Messsystem sichtbaren Bereich enthält. Das Licht kann auch Infrarotanteile enthalten. Das Licht kann auch Ultraviolettanteile enthalten. Insbesondere kann das Licht Anteile im Wellenlängenbereich von ca. 330 bis 790 nm enthalten.

Das Verfahren nutzt weiterhin mindestens ein, von mindestens einem lichtempfindlichen Sensor, wie einer Bildkamera, generiertes Bildsignal.

Die Lichtquelle und der lichtempfindliche Sensor bilden ein Messsystem, insbesondere ein solches, mit dem sich das Erscheinungsbild der Bahn erfassen lässt.

Das Verfahren nutzt weiterhin ein Auswertesystem. Das Auswertesystem kann die interessierenden charakteristischen Eigenschaften, wie die Vergrauung etc., aus dem Erscheinungsbild bzw. aus von dem Erscheinungsbild abgeleiteten Beschreibungsparametern ermitteln. Die Ermittlung der charakteristischen Parameter erfolgt vorzugsweise online, d. h. während des laufenden Betriebes. Die Ermittlung erfolgt weiterhin vorzugsweise in Echtzeit.

Erfindungsgemäß umfasst das Verfahren die Nutzung von zwei unterschiedlichen Lichtern. Die Lichtquelle umfasst zwei Lichter. Es können auch mehr als eine Lichtquelle, vorzugsweise zwei oder drei Lichtquellen vorhanden sein. Sind mehr als eine Lichtquelle vorhanden, so kann eine Lichtquelle auch nur ein einziges Licht ausstrahlen.

Erfindungsgemäß sind die zwei Lichter ein erstes Licht mit einer ersten Farbe und ein zweites Licht mit einer zweiten, von der ersten unterschiedlichen Farbe. Unter Farbe wird hier insbesondere ein Bandspektrum eines chromatischen Lichtes verstanden. Weil die erste und die zweite Farbe unterschiedlich sind, weisen die beiden Bandspektren der ersten und der zweiten Farbe zumindest für den Sensor deutlich unterscheidbare Mittenfrequenzen auf. Eine Farbe kann insbesondere auch nur aus einer einzigen Spektrallinie bestehen, wie sie beispielsweise von einem Halbleiterlaser ausgesendet werden kann. Im Falle von Linienspektren liegen die beiden Farben frequenzmäßig so weit voneinander entfernt im sichtbaren Bereich, dass der Sensor die Farblinien als unterschiedliche Farben auflösen kann bzw. dass zwei Bilder, jeweils in einer der beiden Farben, aus dem Bildsignal des Sensors ermittelt werden können. Ein Farblicht kann auch aus einer Kombination von einem Band- und einem Linienspektrum zusammengesetzt sein.

Die beiden Lichter treten mit der Fasern beinhaltenden Bahn in Wechselwirkung, d. h. ein Licht wird von der Bahn zumindest teilweise reflektiert bzw. zumindest teilweise transmittiert. Ein auf die Bahn auftreffender Teil eines von dieser zumindest teilweise reflektierten Lichtes heißt ein Auflicht. Ein von der Bahn zumindest teilweise transmittiertes, d. h. durchgelassenes Licht, heißt ein Durchlicht. In einer Ausführungsform können die beiden Farblichter räumlich hintereinander von der gleichen Seite auf die bewegte Bahn gestrahlt sein, sodass zwei Auflicht-Erscheinungsbilder in voneinander unterschiedlichen Farben generierbar sind. In einer anderen Ausführungsform können die beiden Farblichter von unterschiedlichen Seiten auf die Bahn gestrahlt sein, sodass zumindest ein Auflicht-Erscheinungsbild und zumindest ein Durchlicht-Erscheinungsbild generierbar sind.

Der mindestens eine lichtempfindliche Sensor generiert aus den von ihm empfangenen Teilen des ersten und des zweiten Lichtes das Bildsignal. Aus dem Bildsignal kann das Auswertesystem die charakteristischen Eigenschaften der Fasern beinhaltenden Bahn ermitteln.

Der Vorteil des erfindungsgemäßen Verfahrens besteht darin, dass durch die Wechselwirkung der Bahn mit mindestens zwei unterschiedlichen Farblichtern bzw. der verfahrensgemäßen Verwendung von zumindest zwei vom Sensor unterscheidbaren Farblichtern die Zuordnung der jeweiligen ermittelten charakteristischen Eigenschaft zu einer zu ermittelnden Störung im Erscheinungsbild eindeutig durchführbar ist. Die statistische Häufigkeit von Fehldiagnostizierungen von insbesondere vollautomatisch zu ermittelnden und auszuregelnden Störungen im Erscheinungsbild kann auf diese Weise vorteilhafterweise deutlich reduziert werden. Insbesondere besteht ein großer Vorteil des Verfahrens darin, dass ein Bild im Auflicht, ein weiteres Bild im Durchlicht auswertbar sind. Wenn nun im eine Faser bzw. eine Faserkreuzung in der Auflichtfarbe dunkel erscheint, dieselbe Faser bzw. eine Faserkreuzung jedoch in der Durchlichtfarbe hell, dann ist dies ein eindeutiger Hinweis auf einen Transparenzeffekt. Aufgrund der zuverlässigen, lokal zuordnenbaren Feststellung eines Transparenzeffektes kann, insbesondere bei zeitlich gehäuftem Auftreten des Effektes, an der lokalen Stelle, wie einer bestimmten Position in Maschinenbreite gesehen, innerhalb einer Papierbahn, dieser vorzugsweise zonal bzw. lokal angepasst, ausgeregelt werden.

Wie ausgeführt ist es besonders vorteilhaft, wenn ein von der Fasern beinhaltenden Bahn reflektierter Anteil des ersten Lichtes und ein von der Fasern beinhaltenden Bahn durchgelassener Anteil des zweiten Lichtes von dem mindestens einen lichtempfindlichen Sensor empfangen wird. Durch die Aufspaltung in Auflicht- und Durchlicht lässt sich die Feststellung einer lokalen Störung im Erscheinungsbild besonders zuverlässig treffen.

Vorteilhafterweise emittiert mindestens eine erste Lichtquelle die erste Farbe und mindestens eine zweite Lichtquelle die zweite Farbe. Auf diese Weise kann sehr einfach die eine Lichtquelle auf der einen Seite der Bahn, beispielsweise oberhalb oder unterhalb der Bahn, und die andere Lichtquelle auf der anderen Seite der Bahn angeordnet werden. Durch die Auftrennung in zwei räumlich separate Lichtquellen können die Farblichter weiterhin vorteilhafterweise auch einfach aus unterschiedlichen Richtungen auf bzw. durch die Bahn hindurch gestrahlt werden. Beispielsweise kann das Auflicht von schräg oberhalb und das Durchlicht von senkrecht unterhalb der Bahn aufgestrahlt werden.

Weiterhin ist es vorteilhaft, wenn mindestens ein erster für die erste Farbe empfindlicher Sensor und mindestens ein zweiter für die zweite Farbe empfindlicher Sensor genutzt werden. Die beiden Sensoren können insbesondere für unterschiedliche Farben bzw. unterschiedliche Farbpaare empfindlich sein.

Durch die Verdoppelung der Sensor-Hardware steigen einerseits zwar die Materialkosten, die Verdoppelung wirkt sich andererseits jedoch günstig hinsichtlich der Parallelisierung und Echtzeit-Fähigkeit der Auswertung bzw. des Auswertesystems aus. Durch die Empfindlichkeit der beiden Sensoren auf unterschiedliche Farben bzw. Farbpaare, d. h. insbesondere vier unterschiedliche Farben, können präzise auf die zu ermittelnde charakteristische Eigenschaft bzw. Störungen derselben abgestimmte Lichtfarben auf die Bahn aufgestrahlt, erfasst und ausgewertet werden.

Weiterhin ist es günstig, wenn das Bildsignal des mindestens einen lichtempfindlichen Sensors mindestens einen ersten und einen zweiten Farbkanal aufweist. Ein Farbkanal ist ein Datenkanal, über den die Farbinformation, d. h. Informationen über die gemessene Helligkeit bzw. Intensität einer bestimmten Farbe, vorzugsweise punktweise aufgelöst, vom Messsystem an das Auswertesystem übertragbar ist.

Besonders vorteilhaft ist es, wenn der mindestens eine lichtempfindliche Sensor eine Farbkamera, insbesondere mit mindestens einem CCD-Chip, ist. Eine Farbkamera, insbesondere Farbvideokamera enthält vorteilhafterweise bereits ein Bild erzeugendes System, wie eben einen CCD-Chip, mittels dessen die unterschiedlich gefärbten Teilbilder extrahierbar sind. Beispielsweise kann eine hochwertige herkömmliche digitale Videokamera in großer Geschwindigkeit Bildsignale mit der benötigten Farbteilinformation über standardisierte Schnittstellen an das Auswertesystem liefern.

Da CCD-Sensoren nur helligkeitsempfindlich sind, nicht aber farbempfindlich, müssen die Lichtsignale für die Farberfassung vor der Umwandlung über Farbfilter, wie einem Bayer-Filter oder einem Interferenzfilter, in Primärfarben, beispielsweise rot, grün und blau gefiltert werden. Jedem CCD-Pixel kann ein eigenes Farbfilter vorgeschaltet sein. Da die Farbfilter die physikalische Auflösung des Sensors reduzieren, kann durch Interpolation der Helligkeitswerte der Nachbarpixel jedem Bildpunkt des Sensors ein eigener Farbwert, wie ein RGB- oder CMY(K)-Wert, zugewiesen werden.

Besonders günstig ist es, wenn die erste Farbe ein Blau und die zweite Farbe ein Rot ist. Ein Rot, kurz R, ist eine Lichtfarbe im Wellenlängenbereich von ca. 590 bis 680 nm. Im auf Basis eines von der Commission Internationale de l'Éclairage (CIE) entworfenen Farbmodells definierten CIE-Farbraum hat Rot eine Wellenlänge zwischen 625 nm und 780 nm, was einer Frequenz zwischen 380 THz und 480 THz entspricht. Auch ein Rot aus dem Bereich der CIE-Rot-Definition ist ein erfindungsgemäßes Rot. Ein Blau, kurz B, ist eine Lichtfarbe im Wellenlängenbereich von ca. 400 bis 530 nm. Im CIE-Farbraum hat Blau eine Wellenlänge zwischen 430 nm und 500 nm, was einer Frequenz zwischen 700 THz und 600 THz entspricht. Auch ein Blau aus dem Bereich der CIE-Blau-Definition ist ein erfindungsgemäßes Blau. Die beiden Farben können auch andere Farben, insbesondere aus dem RGB-Farbraum, wobei R für ein Rot, B für ein Blau und G für ein Grün steht, sein. Bevorzugt sind jedoch Farbpaare, deren Farben von einem bzw. mehreren lichtempfindlichen Sensor problemlos unterschieden werden können.

Insbesondere für reflektierende Medien, also für drucktechnische Einrichtungen in der Druckindustrie bzw. für das Auflichtbild der Fasern beinhaltenden Bahn, könnten die beiden unterschiedlichen Farben günstigerweise auch nach dem CMY-Farbmodell oder nach dem von diesem nur geringfügig abweichenden CMYK-Modell ausgewählt sein. CMY steht bekanntlich für Cyan (C), Magenta (M), Gelb (Y). Das K in CMYK steht bekanntlich für "Key" und soll sich bewusst von der Bezeichnung Schwarz unterscheiden, da es drucktechnisch nur zur Kontrasterhöhung eingesetzt wird.

Erfindungsgemäß ist in dem Auswertesystem mit Hilfe des Bildsignals des mindestens einen lichtempfindlichen Sensors ein Bild einer Bildanalyse zuführbar. Das Auswertesystem kommuniziert vorzugsweise mit einem Leitsystem. Das Bild ist insbesondere ein digitales oder zumindest ein digitalisierbares Bild. Mit Hilfe der Bildanalyse ist eine Gestaltdetektion durchführbar. Eine Gestaltdetektion kann insbesondere die, beispielsweise mit Standard-Bildverarbeitungsalgorithmen ausführbare Detektion einer lokalen Form, wie einer Kante (edge) und/oder einer Ecke (vertex) umfassen. Die Bildanalyse ermöglicht vorteilhafterweise die vollautomatische Auswertung eines Farbbildes in dem Auswertesystem.

Das Bild ist in mindestens zwei, vorzugsweise drei, Farbanteile, wie einen Rotanteil, einen Grünanteil, einen Blauanteil etc., zerlegbar. Wie angedeutet, ist die Zerlegung in Farbbilder unterschiedlicher Farbe für die nachfolgende Auswertung und eindeutige Klassifizierung und Feststellung der Ausprägung von charakteristischen Eigenschaften eines Erscheinungsbildes der Bahn vorteilhaft.

Besonders günstig ist es, wenn für die Bildanalyse lediglich ein erster und ein zweiter Farbanteil des Bildes herangezogen werden. Vorteilhafterweise sind dies ein Rotanteilbild und ein Blauanteilbild. Dies vermindert vorteilhafterweise den Auswerteaufwand.

Zumindest der erste Farbanteil des Bildes kann punktweise einen ersten Farbwert und zumindest der zweite Farbanteil des Bildes punktweise einen zweiten Farbwert annehmen. Die Farbwerte können jeweils unterschiedliche Ausprägungen, wie zumindest dunkel oder hell, annehmen. Es sind die von dem zu untersuchenden Effekt, wie einem Transparenzeffekt bzw. einer Opazitätsänderung, hervorgerufenen Helligkeits- bzw. Intensitätsschwankungen, die die einzelnen Bildpunkte, die gruppenweise durch die Bildanalyse in lokale Form identifizierbar sind, hell bzw. dunkel erscheinen lassen. Vorteilhafterweise lassen sich die hellen und dunklen Farbwerte bzw. gegebenenfalls Zwischenwerte, wie Rot- oder Blauzwischenwerte, in der Bildanalyse als Information über das Erscheinungsbild der Bahn verarbeiten.

Besonders vorteilhaft ist es, wenn eine mittels der Gestaltdetektion in dem Bild aufgefundene lokale Form den ersten Farbwert mit einer ersten Ausprägung, wie dunkel oder hell, und den zweiten Farbwert mit einer zweiten Ausprägung, wie dunkel oder hell, aufweist. Auf diese Weise kann vorteilhafterweise die Klassifikation und Feststellung der Ausprägung einer Störung einer charakteristischen Eigenschaft im Erscheinungsbild der Bahn präzise und eindeutig durchgeführt werden.

Überaus vorteilhaft ist es, wenn aus der Kombination des ersten und des zweiten Farbwertes einer lokalen Form Rückschlüsse auf die charakteristischen Eigenschaften der bewegten, Fasern beinhaltenden Bahn ziehbar sind. Werden beispielsweise ein Rot und ein Blau als erste und zweite Farbe, oder umkehrt ein Rot und ein Blau als zweite und erste Farbe, verwendet, so finden sich für eine gefundene lokale Form die in der folgenden Tabelle zusammengefassten Interpretationsmöglichkeiten des aufgetretenen Effektes aus der Blau-Wert/Rot-Wert-Kombination:

| Auflicht Blau-Wert | Durchlicht Rot-Wert | Interpretation |
|---|---|---|
| dunkel | dunkel | Dunkler Fleck, z. B. schwarze Faser |
| hell | dunkel | Höhere Masse an dieser Stelle der Bahn |
| dunkel | hell | Transparenzeffekt, z. B. Schwarzsatinage bzw. Blackening |
| hell | hell | Geringere Masse an dieser Stelle der Bahn |

Das bedeutet im Ergebnis vorteilhafterweise, dass insbesondere Transparenzeffekte einfach und eindeutig nachweisbar sind. Günstigerweise ist mit diesem Verfahren auch die mittlere Transparenz und/oder die mittlere Masse und /oder die mittlere Schmutzpunkthäufigkeit (dunkle Flecken) der Bahn ermittelbar.

So ist es möglich ein Erfahrungs- und /oder Regelwissen aufzubauen und typische Erscheinungsformen in den Bildern automatisch zu Kategorisieren. Beispielsweise kann eine Kategorie ein Loch in der Bahn mit einer Größe von 2-4mm ² entsprechen und eine andere Kategorie einem dunklen Schmutzfleck mit länglicher Form. Die Kategorien können entweder als Regel definiert oder durch Lernverhalten automatisch gebildet werden. Auch eine Kombination ist denkbar.

Vorteilhafterweise tritt zusätzlich ein drittes Licht mit einer dritten, von der ersten und der zweiten unterschiedlichen Farbe, mit der Fasern beinhaltenden Bahn in Wechselwirkung. Das dritte Licht kann beispielsweise als Farbe ein Grün aufweisen. Ein Grün entspricht dem Wellenlängenbereich von ca. 510 bis 600 nm. Im CIE-Farbraum hat ein Grün eine Wellenlänge zwischen 520 nm und 560 nm, was Frequenzen von 535 THz bis 575 THz entspricht. Alle eben genannten Wellenlängenbereiche stellen mögliche Bereiche für die dritte Farbe dar. Vorteilhafterweise ist eine Unterscheidbarkeit der Bildfarbanteiles durch den Sensor bei entsprechender, insbesondere nicht überlappender Wahl der Lichtspektren für das erste, zweite und dritte Licht in einfacher und eindeutiger Weise möglich.

Vorzugsweise ist die Art der Wechselwirkung des dritten Lichtes mit der Bahn eine Streifung, d. h. der Einfallswinkel des dritten Lichtes auf die Bahn ist so flach, dass ein Auflichtbild, jedoch in der Art einer Streiflichtbeleuchtung im Blickfeld mindestens einer Kamera, entsteht. Im Streiflicht sind vorteilhafterweise insbesondere lokale Topographieunterschiede der Fasern beinhaltenden Bahn, wie Rakelstreifen, Siebmarkierungen, Narbigkeit etc., detektierbar. Das Streiflichtbild entsteht somit aus dem dritten Licht, wobei dieses flacher auf die Bahn einfällt, als das erste bzw. zweite Licht, das für das Auflichtbild verwendet wird.

Vorteilhaft ist es des Weiteren, wenn der Einfluss eines nicht von der mindestens einen Lichtquelle emittierten Hintergrundlichtes auf das Bild kompensierbar ist.

Dies kann vorzugsweise mit Hilfe von Referenzbildern geschehen. Durch die Kompensation des Hintergrundlichtes wird die Auswertung der Bildsignale vereinfacht und erleichtert.

Besonders vorteilhaft ist es weiterhin, wenn in der Bildanalyse die Farbe der Fasern beinhaltenden Bahn berücksichtigt wird. Die Farbe der Fasern wird vorzugsweise während einer Wechselwirkung der Fasern beinhaltenden Bahn mit einem Licht ermittelt. Das Licht zur Ermittlung kann das erste, zweite, dritte Licht oder ein anderes Licht sein. Beispielsweise kann, optional zusätzlich, ein UV-Licht, zur Ermittlung der Farbe der Fasern genutzt werden. Diese Ermittlung wird vorzugsweise vor verschiedenfarbigen Hintergründen durchgeführt. Durch die Berücksichtigung der Eigenfarbe der Fasern wird die Auswertung der Bildsignale weiter vereinfacht und erleichtert.

Die Erfindung umfasst weiterhin eine Messvorrichtung zur optischen Erfassung und Auswertung von charakteristischen Eigenschaften, wie Störungen im Erscheinungsbild, einer bewegten Fasern, wie Zellstofffasern, beinhaltenden Bahn. Die Messvorrichtung nutzt dazu zumindest die folgenden Komponenten: eine Lichtquelle und einen ein Bildsignal generierenden lichtempfindlichen Sensor, wie einer Bildkamera, und ein Auswertesystem. Die Messvorrichtung realisiert erfindungsgemäß das Verfahren nach einem der Ansprüche 1 bis 16 realisiert. Das Auswertsystem und die Bildkamera können dabei auch in einem Gehäuse untergebracht sein bzw. eine Einheit bilden.

Weiterhin ist es vorteilhaft, wenn ein erstes und ein zweites, von dem ersten unstörbares, verfahrensgemäßes Messsystem vorhanden sind. Dadurch können vorteilhafterweise unterschiedliche Seiten der Bahn, wie die Oberseite und die Unterseite der Bahn, separat erfasst werden.

Auch können vorzugsweise ein erstes und ein zweites Auswertesystem vorhanden sein. Das erste Messsystem kann in diesem Fall im Zusammenwirken mit dem ersten Auswertesystem charakteristische Eigenschaften einer ersten Seite, wie der Oberseite, der Fasern beinhaltenden Bahn erfassen bzw. ermitteln, während das zweite Messsystem im Zusammenwirken mit dem zweiten Auswertesystem, vorzugsweise simultan zu der ersten Mess-/Auswerteeinheit, charakteristische Eigenschaften einer anderen zweiten Seite, wie der Unterseite, der Fasern beinhaltenden Bahn erfassen bzw. ermitteln kann. Einerseits werden zwar durch die Vervielfachung der Systeme der Hardwareaufwand und damit die Materialkosten erhöht, jedoch wird andererseits die Qualität der Bahn deutlich reicher, insbesondere informationsreicher, erfass- und auswertbar. Die beidseitige Erfassung und Auswertung der Bahneigenschaften ist insbesondere bei Faserprodukten vorteilhaft, bei denen beide Seiten, also die Ober- und die Unterseite, vom Produktnutzer in seiner Qualitätsbeurteilung herangezogen werden.

Besonders vorteilhaft ist es weiterhin, wenn das Auswertesystem die charakteristischen Eigenschaften der Fasern beinhaltenden Bahn im Zusammenwirken mit dem Messsystem in Echtzeit ermittelt. "In Echtzeit" bedeutet hier, dass die Ermittlung so schnell erfolgt, dass mit Hilfe einer Rückkoppelung von die charakteristischen Eigenschaften abbildenden physikalischen Größen Störungen im Erscheinungsbild der Fasern beinhaltenden Bahn ausregelbar sind. Kurz durch die Echtzeit-Ermittlung ist die erfindungsgemäße Mess-/Auswertekombination vorteilhafterweise in eine bestehendes Regelungssystem einbindbar. Die rückgekoppelten physikalischen Größen können vorzugsweise ein elektrischer Strom bzw. eine elektrische Spannung sein.

### Figurenbeschreibung

Weitere Merkmale und Vorteile der Erfindung ergeben sich aus der nachfolgenden Beschreibung bevorzugter Ausführungsbeispiele unter Bezugnahme auf die Zeichnung.

Es zeigen:
Fig. 1 eine schematische Seitenansicht einer ersten Ausführungsform einer das erfindungsgemäße Verfahren realisierenden Messvorrichtung
Fig. 2 eine schematische Seitenansicht einer zweiten Ausführungsform der erfindungsgemäßen Messvorrichtung
Fig. 3 ein Diagramm mit der selektiven spektralen Empfindlichkeit eines CCD-Sensors in Abhängigkeit von der Wellenlänge.

Nachfolgend werden zwei Ausführungsformen der Erfindung anhand der Figuren näher beschrieben.

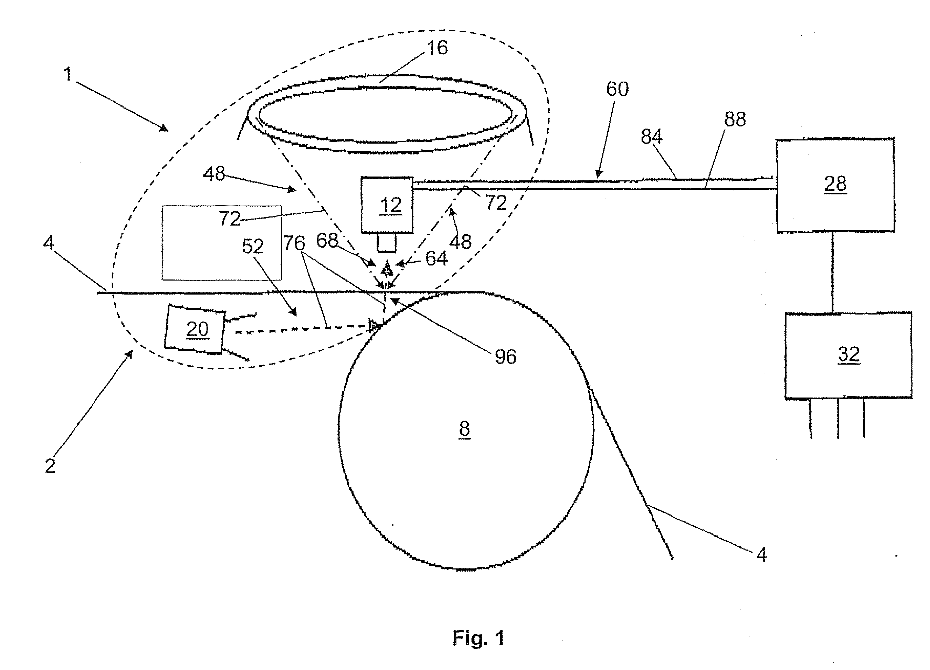

Die erste Ausführungsform einer erfindungsgemäßen Messvorrichtung 1 dient der Erfassung und Auswertung der lokalen Vergrauung einer Papierbahn 4 einer Papiermaschine. In Fig. 1 ist lediglich eine Umlenkwalze 8 der Papiermaschine dargestellt, mittels der und über die die Papierbahn umgelenkt bewegt wird. Eine Papiermaschine hat in der Regel eine Vielzahl von Walzen. Zumindest in der Nähe einiger von diesen könnten weitere erfindungsgemäße Messvorrichtungen vorhanden sein. Grundsätzlich könnte die Messvorrichtung 1 auch an mehreren anderen Stellen, d. h. nicht in der Nähe einer Walze, insbesondere auch in unterschiedlichen Partien der Papiermaschine, vorhanden sein. Herkömmlich wird die Papierbahn 4 auf einem Langsieb geführt. Der Übersicht halber ist das Langsieb nicht extra dargestellt.

Die Messvorrichtung 1 implementiert ein Verfahren zur optischen Erfassung und Auswertung der lokalen Vergrauung der Papierbahn 4, welche hier eine Ausbildung einer charakteristischen Eigenschaft im Sinne einer Störung im Erscheinungsbild der Papierbahn 4 ist. Die Papierbahn 4 enthält, wie bekannt, Zellstofffasern. Die Bahn 4 ist hier bewegt, d. h. sie bewegt sich relativ zu der Messvorrichtung 1. Es könnte auch umgekehrt sein, nämlich die Fasern beinhaltende Bahn 4 ruht relativ zur Umgebung und die Messvorrichtung wird bewegt, beispielsweise in einer Art zeilenförmigem Scanvorgang.

Die Messvorrichtung 1 nutzt in der ersten Ausführungsform die folgenden Komponenten: Ein erstes Licht 48 einer ersten Lichtquelle 16 und ein zweites Licht 52 einer zweiten Lichtquelle 20 wird genutzt. Die Lichtquelle 16 ist hier ringförmig ausgebildet und strahlt ein diffuses Licht 48 aus. Weiterhin nutzt die Messvorrichtung 1 ein von einem lichtempfindlichen Sensor 12, hier einer Farbvideokamera mit einem CCD-Chip, generiertes Bildsignal 60.

Die Lichtquelle 16 ist oberhalb des Sensors 12 angeordnet. Der Sensor 12 selbst ist etwas oberhalb der Oberseite der Bahn 4 angeordnet. Der Abstand zwischen Sensor 12 und Bahn 4 kann je nach den Erfordernissen bzw. Möglichkeiten dem Einsatzfall angepasst werden. Der Abstand muss jedoch so ausreichend sein, dass aus dem Bildsignal 60 des Sensors 12 ein scharfes Bild der Oberfläche der Bahn 4 generiert werden kann. Die lichtempfindliche Oberfläche des Sensors 12, hier das Objektiv der CCD-Kamera, ist der Oberseite der Bahn 4 zugewandt. Der Durchmesser der ringförmigen Lichtquelle 16 ist so groß, dass das von ihr in Richtung zur Bahn 4 emittierte Licht 48 ungehindert, d. h. insbesondere vom Sensor 12 unabgeschattet, seitlich umfänglich an dem Sensor 12, vorbei strahlen kann. Die Lichtquelle 20 ist unterhalb der Bahn 4 angeordnet. Sie ist auf derselben Seite der Bahn 4 wie die Walze 8 angeordnet. Die Lichtquelle 20 strahlt das Licht 52 fokussiert auf die Walze 8. Die Oberfläche der Walze ist für das Licht 52 reflektierend. Das Licht 52 wird so auf die Oberfläche der Walze gestrahlt, dass der reflektierte Teil des Lichtes 52 im Wesentlichen senkrecht, d. h. senkrecht oder in einem spitzen Winkel, zur Bahnebene auf die Unterseite der Bahn 4 trifft. Das Licht 52 tritt somit zumindest teilweise durch die Bahn 4 hindurch und kann vom Sensor 12 empfangen werden.

Die Lichtquellen 16, 20 und der lichtempfindliche Sensor 12 bilden ein Messsystem 2, welches in Fig. 1 als die strichlierte ovale Umrandung gekennzeichnet ist.

Weiterhin nutzt die Messvorrichtung 1 ein Auswertesystem 28 zur Auswertung des Bildsignals 60.

Die Lichtquelle 16, 20 umfasst zwei Lichter 48, 52. Das erste Licht 48 weist eine erste Farbe 72 auf. Die erste Farbe 72 ist in Fig. 1 durch die Strich-Punktierung der Lichtpfeile 72 symbolisiert. Das zweite Licht 52 weist eine zweite, von der ersten unterschiedliche, Farbe 76 auf. Die zweite Farbe 76 ist in Fig. 1 durch die Strichlierung der Lichtpfeile 76 angedeutet.

Die beiden Lichter 48, 52 treten mit der Fasern beinhaltenden Bahn 4 in Wechselwirkung. Das erste Licht 48 wird nach der Wechselwirkung mit der Bahn zumindest teilweise von der Oberfläche der Bahn in Richtung zum Sensor 12 reflektiert. Das zweite Licht 52 durchstrahlt zumindest teilweise von der Unterseite her kommend die Bahn 4. Beide Lichter 48, 52 werden nach der Wechselwirkung mit der Bahn vom Sensor 12 empfangen.

Der lichtempfindliche Sensor 12 generiert aus den von ihm empfangenen Teilen des ersten und des zweiten Lichtes 48, 52 das Bildsignal 60. Aus dem Bildsignal 60 kann das Auswertesystem 28 die charakteristischen Eigenschaften der Fasern beinhaltenden Bahn 4, hier die lokale Vergrauung, ermitteln.

Ein von der Fasern beinhaltenden Bahn 4 reflektierter Anteil 64 des ersten Lichtes 48 und ein von der Fasern beinhaltenden Bahn 4 durchgelassener Anteil 68 des zweiten Lichtes 52 wird von dem lichtempfindlichen Sensor 12 empfangen.

Die erste Lichtquelle 16 emittiert die erste Farbe 72 und die zweite Lichtquelle 20 emittiert die zweite Farbe 76. Man könnte auch sagen, die erste Lichtquelle 16 emittiert ein der ersten Farbe 72 entsprechendes chromatisches Licht und die zweite Lichtquelle 16 emittiert ein der zweiten Farbe 76 entsprechendes chromatisches Licht.

Das Bildsignal 60 des lichtempfindlichen Sensors 12 weist einen ersten und einen zweiten Farbkanal 84, 88 auf. Die Farbkanäle 84, 88 können durch separate physische Mittel, wie hier Busleitungen, oder mithilfe eines Übertragungsverfahrens, wie einem Multiplex-Verfahren, auf einem gemeinsamen Bus übertragen werden.

Der lichtempfindliche Sensor 12 ist hier eine Farbkamera, die einen CCD-Chip aufweist.

Die erste Farbe 72 ist ein Blau. Die zweite Farbe 76 ist ein Rot. Das Rot, kurz R, ist eine Lichtfarbe im Wellenlängenbereich von ca. 590 bis 780 nm. Das Blau, kurz B, ist eine Lichtfarbe im Wellenlängenbereich von ca. 400 bis 530 nm.

Das Auswertesystem 28 kommuniziert hier mit einem Leitsystem 32. Das Leitsystem 32 kann Prozessparameter, wie die Zugabe von die Vergrauung beeinflussenden Hilfsstoffen, steuern bzw. regeln.

In dem Auswertesystem 28 ist mit Hilfe des Bildsignals 60 des lichtempfindlichen Sensors 12 ein Bild einer Bildanalyse zuführbar. Das Bild ist hier ein digitales Bild. Mit Hilfe der Bildanalyse ist, hier in Echtzeit, eine Gestaltdetektion, hier eine Detektion einer lokalen Form 96 durchführbar. Die lokale Form 96 besitzt hier, insoweit der Transparenzeffekt der Vergrauung festgestellt werden soll, die Gestalt von einander kreuzenden Fasern bzw. von transparenten Faserlinien.

Das mittels des Bildsignals 60 transportierbare Bild ist in zwei Farbanteile, hier einen Rotanteil und einen Blauanteil, zerlegbar. Somit werden hier für die Bildanalyse lediglich ein erster und ein zweiter Farbanteil des Bildes herangezogen.

Der erste Farbanteil des Bildes nimmt punktweise einen ersten Farbwert und der zweite Farbanteil des Bildes punktweise einen zweiten Farbwert an. Die Farbwerte können jeweils unterschiedliche Ausprägungen, hier dunkel oder hell, annehmen.

Eine mittels der Gestaltdetektion in dem Bild aufgefundene lokale Form 96 weist den ersten Farbwert mit einer ersten Ausprägung, hier dunkel oder hell, und den zweiten Farbwert mit einer zweiten Ausprägung, hier ebenfalls dunkel oder hell, auf.

Aus der Kombination des ersten und des zweiten Farbwertes, insbesondere aus der Gruppe der Farben Blau, Rot und Grün, einer lokalen Form 96 sind Rückschlüsse auf die charakteristischen Eigenschaften, hier die lokale Vergrauung, der bewegten, Fasern beinhaltenden Bahn 4 ziehbar. Hierzu werden die Werte von wenigstens zwei Farbwerten miteinander kombiniert.

Der Einfluss eines nicht von einer der Lichtquellen 16, 20 emittierten Hintergrundlichtes auf das Bild ist kompensierbar. Diese Hintergrundlicht-Kompensation wird hier mit Hilfe von Referenzbildern vorgenommen.

In der Bildanalyse wird die Farbe der Fasern beinhaltenden Bahn 4 berücksichtigt. Die Farbe der Fasern beinhaltenden Bahn 4 wird hier während einer Wechselwirkung der Fasern beinhaltenden Bahn 4 mit dem ersten und dem zweiten Licht 48, 52 und zusätzlich einem UV-Licht, und zwar vor verschiedenfarbigen Hintergründen, ermittelt. Bei den zur Ermittlung der Bahnfarbe angefertigten Bildern kommt es nicht so sehr auf lokale Muster an, sondern auf die mittlere Farbe am Messort.

Wie nunmehr gezeigt wurde, realisiert die Messvorrichtung 1 das erfindungsgemäße Verfahren.

Das Auswertesystem 28 ermittelt die charakteristischen Eigenschaften der Fasern beinhaltenden Bahn 4, hier die lokale Vergrauung, im Zusammenwirken mit dem Messsystem 2 in Echtzeit. Das heißt, die lokale Vergrauung wird auf der Oberfläche der am Sensor 12 vorbeibewegten Bahn 4 so schnell ermittelt, dass mit Hilfe einer Rückkoppelung von die charakteristischen Eigenschaften abbildenden physikalischen Größen, hier ein elektrischer Strom bzw. eine elektrischen Spannung, Störungen im Erscheinungsbild der Fasern beinhaltenden Bahn 4 ausregelbar sind. Die Störungen, d. h. die lokalen Vergrauungen, sind hier durch das Leitsystem 32 ausregelbar.

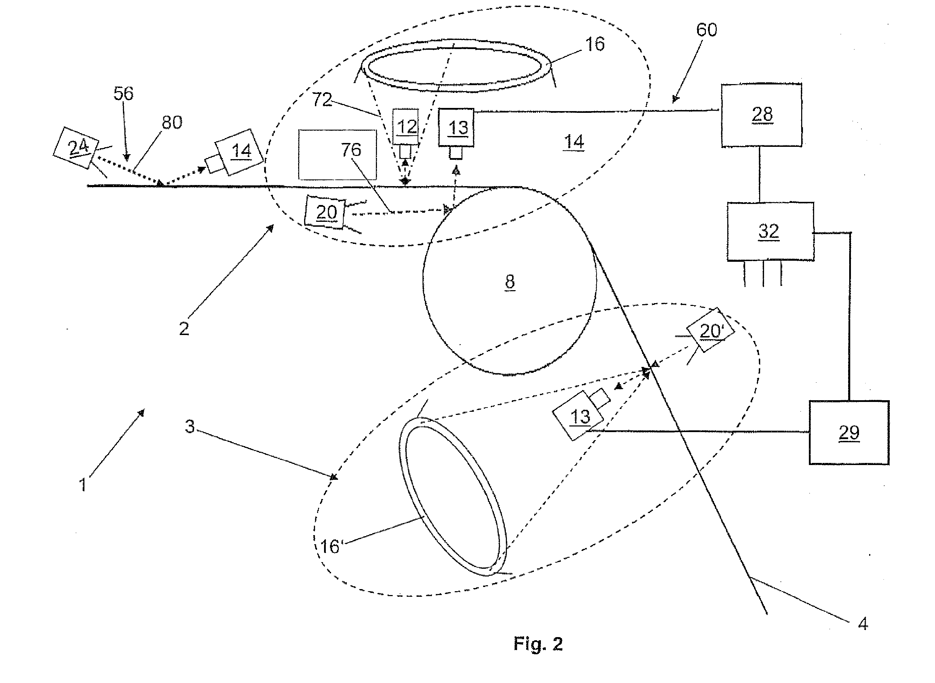

Die in Fig. 2 dargestellte zweite Ausführungsform der Messvorrichtung 1 ist eine erweiterte Ausbildung der oben beschriebenen ersten Ausführungsform. Im Unterschied zur ersten Ausführungsform werden hier ein erster für die erste Farbe 72 empfindlicher Sensor 12 und ein zweiter für die zweite Farbe 76 empfindlicher Sensor 13 genutzt. Diese Lösung mit zwei nacheinander geschalteten Kameras 12,13 ist sehr aufwändig, deshalb ist sie weniger bevorzugt als die erste Ausführungsform. Papierfasern sind sehr dünn (dünner als 0.1 mm) und die Produktionsgeschwindigkeit der Bahn ist sehr hoch (größer 100 km/h). Daher ergeben sich hohe Anforderungen an die Synchronisation der beiden Kameras.

Zusätzlich tritt hier ein drittes Licht 56 mit einer dritten, von der ersten und der zweiten unterschiedlichen Farbe 80 mit der Fasern beinhaltenden Bahn 4 in Wechselwirkung. Das dritte Licht 56 wird hier von einer dritten Lichtquelle 24 ausgestrahlt. Die dritte Farbe 80 ist ein Grün aus dem Wellenlängenbereich von ca. 510 bis 600 nm.

Das Licht 56 streift die Bahn 4 in einem flachen Winkel. Man kann von einer Art Streiflichtbeleuchtung sprechen. Nach der Streifung wird das Licht von einem dritten lichtempfindlichen Sensor 14 empfangen. Das Bildsignal des Streiflichtsensors 14 kann ebenfalls in dem Auswertesystem 28 ausgewertet werden. Der Streifwinkel muss so flach sein, dass lokale Topographieunterschiede der Fasern beinhaltenden Bahn 4, wie Rakelstreifen, Siebmarkierungen, Narbigkeit, welche im Streiflicht besonders gut sichtbar werden, detektierbar sind. Idealerweise kommt das Streiflicht 56 aus allen Richtungen gleichmäßig. Um spezielle Defekte zu erkennen (z. B. Rakelstreifen) ist eine Orientierung des Lichteinfalls von 90° zum erwarteten Defekt optimal. Eine Auswertung von Kanten und Formen, die grün erscheinen, erlaubt zusätzliche Rückschlüsse auf die Topographie, nämlich auf Dickenunterschiede, die durch die Topographie der Seite der Papierbahn verursacht sind, die der Kamera zugewandt ist. Das heißt, es kann so geklärt werden, ob Topographieunterschiede, z. B. Rakelstreifen, zur unterschiedlichen lokalen Masseverteilung geführt haben.

Der Sensor 13 ist wie in Fig. 2 dargestellt mit der Auswerteeinheit 28 über eine das Bildsignal 60 transportierende Busleitung verbunden. Die Sensoren 12 und 14 sind ebenfalls über entsprechende Busleitungen mit dem Auswertesystem 28 verbunden, die jedoch der Übersichtlichkeit halber nicht dargestellt sind.

Die zweite Ausführungsform der Messvorrichtung 1 umfasst ein erstes und ein zweites, von dem ersten unstörbares, verfahrensgemäßes Messsystem 2, 3. Das erste Messsystem 2 ist hier wie bei der ersten Ausführungsform in Bewegungsrichtung der Bahn 4 vor der Walze angeordnet, während das zweite, gegenüber der ersten Ausführungsform zusätzliche Messsystem 3 hinter der Walze angeordnet ist.

Die zweite Ausführungsform der Messvorrichtung 1 umfasst weiterhin ein erstes und ein zweites Auswertesystem 28, 29. Beide Auswertesysteme 28, 29 sind mit dem Leitsystem 32 verbunden.

Das erste Messsystem 2 erfasst und ermittelt im Zusammenwirken mit dem ersten Auswertesystem 28 die lokale Vergrauung der Oberseite der Fasern beinhaltenden Bahn 4, während das zweite Messsystem 3 im Zusammenwirken mit dem zweiten Auswertesystem 29 eine weitere charakteristische Eigenschaft und zwar der Unterseite der Fasern beinhaltenden Bahn 4 erfasst und ermittelt. Das Messsystem 3 ermittelt hier ebenfalls die lokale Vergrauung, und zwar jene der Unterseite der Bahn 4.

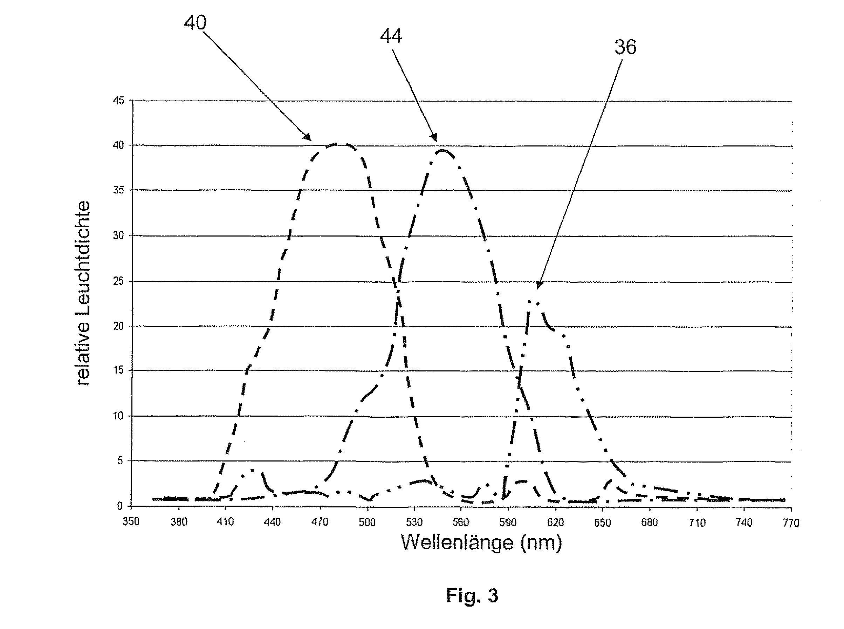

In Fig. 3 ist ein typisches Spektrum einer CCD-Kamera mit RGB-Bildaufnahme dargestellt. Das Diagramm zeigt eine erste, eine zweite und eine dritte spektrale Sensorcharakteristik 36, 44, 40. Die Einheit der Ordinate ist die relative Leuchtdichte, im Englischen "relative luminance". Die relative Leuchtdichte folgt bekanntlich der fotometrischen Definition der Leuchtdichte, deren SI-Einheit cd/m2 ist. Die Werte der relativen Leuchtdichte sind gegenüber der Leuchtdichte jedoch auf einen Bereich von 1 bis 100 bezogen auf ein Referenz-Weiß normalisiert. Alle drei Sensorcharakteristiken sind in einer modernen Videokamera verfügbar. Somit können die drei oben beschriebenen Farben Rot, Grün und Blau selektiv ausgewertet werden. Blau und Rot sind sehr einfach durch geeignet Farbwahl der Beleuchtung separierbar. Das grüne Licht, beispielsweise zwischen ca. 560 und 590 nm, spricht nur den Grün-Sensor der Kamera an.

Zusammenfassend kann somit gesagt werden: Die Messvorrichtung 1 stellt eine Online-Messvorrichtung dar. Das erfindungsgemäße Verfahren und die Messvorrichtung 1 nutzen die Tatsache, dass Störungen im Erscheinungsbild Faserbahn, insbesondere solche, die auf Transparenzeffekten beruhen im Auflicht anders wahrgenommen werden als im Durchlicht. Dazu gehören Vergrauung, d. h. Transparenzeffekte von Fasern, sowie Flecken verursacht durch Flüssigkeitstropfen. Es werden mindestens zwei Beleuchtungen verwendet, weil die beschriebenen Arten von Störungen mit nur einer Art von Beleuchtung nicht eindeutig diagnostiziert werden können. Im Falle von Vergrauung ist jedoch z. B. im Auflicht eine dunkle Faser und eine halbtransparente Faser, die auf Vergrauung hinweist nahezu identisch. Daher erfolgt die Aufnahme derselben Probe mit zwei Bildern. Ein Bild in Auflicht, ein weiteres Bild in Durchlicht. Wenn nun im Auflicht eine Papierfaser dunkel erscheint, im Durchlicht dieselbe Faser jedoch hell - dann ist das ein eindeutiger Hinweis auf einen Transparenzeffekt.

Eine andere Möglichkeit wäre die Verwendung von Auflicht und zwei verschiedenen Hintergründen (z.B. Schwarz und Weiß). Auch so können lokale Transparenzeffekte (Opazitätsänderungen) erkannt werden.

Das Verfahren bzw. die Messvorrichtung gestattet die Online Messung von Transparenzeffekten der Bahn 4 und die Zuordnung der Transparenzeffekte zu Ursachen, wie Vergrauung und/oder Masseverteilung durch nur eine Kamera während der Produktion einer Bahn 4. Die zusätzliche Messung von Topographieeigenschaften der Bahn 4 und insbesondere auch der Dicke der Bahn sind möglich.

Die Kameras werden am besten so an angeordnet, dass der Abstand zwischen Kamera und Bahn konstant ist. Das kann bevorzugterweise dadurch geschehen, dass die Bildaufnahme an einem Ort geschieht, an dem die Bewegungen der Papierbahn in z- Richtung sehr gering sind. Es bietet sich z. B. an, die Bilder in unmittelbarer Nähe einer Walzenoberfläche aufzunehmen. Oder die Bahn wird an der Messstelle durch Bahnstabilisatoren in ihrer Position relativ zur Kamera fixiert. Oder die Kamera befindet sich an einem Messaufbau, der in einer definierten Höhe über der Papierbahn schwebt, z.B. ein Luftkissen.

Insbesondere ist zu achten, dass der Bereich der Tiefenscharfe des Objektivs der Kamera nicht verlassen wird.

Somit kann die Kamera an einem Ort der Papierbahn fest eingebaut sein. Es können alternativ viele Kameras in Maschinenquerrichtung der Papierbahn angeordnet sein. Es kann aber auch eine Kamera mit Beleuchtung auf einem traversierenden Messwagen angeordnet sein.

Die Bildaufnahmezeit, charakterisiert durch Größen wie die Blitzdauer bzw. die Verschlusszeit, muss so gewählt werden, dass auch an einer bewegten Bahn die interessierenden lokalen Objekte genügend scharf für eine Auswertung abgebildet werden. Im Falle von Papierfasern ist eine Bildaufnahmedauer von 1 µsec oder geringer anzustreben.

Die Vorteile der Erfindung sind bestehen darin, dass einerseits Transparenzeffekte lokalisierbar sind, andererseits Masseschwankungen von Dickenschwankungen unterschieden werden können. Das heißt, Unterschiede in der Opazität der Faserbahn können nach ihrer Herkunft unterschieden werden

Außerdem können auch lokale Dickeunterschiede bzw. Topografiestrukturen festgestellt werden.

Damit können, je nach festgestellter Papiereigenschaft, die der Fachmann im Hinblick auf die Einbindung der Erfindung in eine Regelung als Ist-Wert betrachtet, Aktionen ausgelöst werden, um die Papiereigenschaft im Hinblick auf einen Soll-Wert zu korrigieren. Das kann automatisch erfolgen oder durch einen Bediener.

### Bezugszeichenliste

- 1: Messvorrichtung
- 2: (erstes) Messsystem
- 3: zweites Messsystem
- 4: Fasern beinhaltende Bahn
- 8: Umlenkwalze
- 12: erster lichtempfindlicher Sensor
- 13: zweiter lichtempfindlicher Sensor
- 14: dritter lichtempfindlicher Sensor
- 16: erste Lichtquelle
- 20: zweite Lichtquelle
- 24: dritte Lichtquelle
- 28: (erstes) Auswertesystem
- 29: zweites Auswertesystem
- 32: Leitsystem
- 36: erste spektrale Sensorcharakteristik
- 40: zweite spektrale Sensorcharakteristik
- 44: dritte spektrale Sensorcharakteristik
- 48: erstes Licht
- 52: zweites Licht
- 56: drittes Licht
- 60: Bildsignal
- 64: reflektierter Anteil
- 68: durchgelassener Anteil
- 72: erste Farbe
- 76: zweite Farbe
- 80: dritte Farbe
- 84: erster Farbkanal
- 88: zweiter Farbkanal
- 96: lokale Form

## Patentansprüche

1. Verfahren zur optischen Erfassung und Auswertung von charakteristischen Eigenschaften, wie Störungen im Erscheinungsbild, einer Fasern, wie Zellstofffasern, beinhaltenden, insbesondere bewegten Bahn (4), das zumindest die folgenden Komponenten nutzt:
ein Licht (48, 52) einer Lichtquelle (16, 20) und ein von einem lichtempfindlichen Sensor (12, 13), wie einer Bildkamera, generiertes Bildsignal (60), wobei die Lichtquelle (16, 20) und der lichtempfindliche Sensor (12, 13) ein Messsystem (2) bilden,und ein Auswertesystem (28),
**dadurch gekennzeichnet,**
**dass** die Lichtquelle (16, 20) zwei Lichter (48, 52) umfasst, ein erstes Licht (48) mit einer ersten Farbe (72) und ein zweites Licht (52) mit einer zweiten, von der ersten unterschiedlichen Farbe (76), die mit der Fasern beinhaltenden Bahn (4) in Wechselwirkung tritt und der mindestens eine lichtempfindliche Sensor (12, 13) aus den von ihm empfangenen Teilen des ersten und des zweiten Lichtes (48, 52) das Bildsignal (60) generiert, aus dem das Auswertesystem (28) die charakteristischen Eigenschaften der Fasern beinhaltenden Bahn (4) ermitteln kann.

2. Verfahren nach Anspruch 1,
**dadurch gekennzeichnet,**
**dass** ein von der Fasern beinhaltenden Bahn (4) reflektierter Anteil (64) des ersten Lichtes (48) und ein von der Fasern beinhaltenden Bahn (4) durchgelassener Anteil (68) des zweiten Lichtes (52) von dem mindestens einen lichtempfindlichen Sensor (12, 13) empfangen wird.

3. Verfahren nach Anspruch 1 oder 2,
**dadurch gekennzeichnet,**
**dass** mindestens eine erste Lichtquelle (16) die erste Farbe (72) und mindestens eine zweite Lichtquelle (20) die zweite Farbe (76) emittiert.

4. Verfahren nach einem der Ansprüche 1 bis 3,
**dadurch gekennzeichnet,**
**dass** mindestens ein erster für die erste Farbe (72) empfindlicher Sensor (12) und mindestens ein zweiter für die zweite Farbe (76) empfindlicher Sensor (13) genutzt werden.

5. Verfahren nach einem der Ansprüche 1 bis 4,
**dadurch gekennzeichnet,**
**dass** das Bildsignal (60) des mindestens einen lichtempfindlichen Sensors (12, 13) mindestens einen ersten und einen zweiten Farbkanal (84, 88) aufweist.

6. Verfahren nach einem der Ansprüche 1 bis 5,
**dadurch gekennzeichnet,**
**dass** der mindestens eine lichtempfindliche Sensor (12, 13) eine Farbkamera, insbesondere mit einem CCD-Chip, ist.

7. Verfahren nach einem der Ansprüche 1 bis 6,
**dadurch gekennzeichnet,**
**dass** die erste Farbe (72) ein Blau und die zweite Farbe (76) ein Rot ist.

8. Verfahren nach einem der Ansprüche 1 bis 7,
**dadurch gekennzeichnet,**
**dass** in dem Auswertesystem (28), mit Hilfe des Bildsignals (60) des mindestens einen lichtempfindlichen Sensors (12, 13) ein, insbesondere digitales oder zumindest digitalisierbares, Bild einer Bildanalyse zuführbar ist, mit deren Hilfe insbesondere in Echtzeit eine Gestaltdetektion, wie eine Detektion einer lokalen Form (96), durchführbar ist.

9. Verfahren nach Anspruch 8,
**dadurch gekennzeichnet,**
**dass** das Bild in mindestens zwei, vorzugsweise drei, Farbanteile, wie einen Rotanteil, einen Grünanteil, einen Blauanteil, zerlegbar ist.

10. Verfahren nach Anspruch 9,
**dadurch gekennzeichnet,**
**dass** für die Bildanalyse lediglich ein erster und ein zweiter Farbanteil des Bildes herangezogen wird.

11. Verfahren nach Anspruch 9 oder 10,
**dadurch gekennzeichnet,**
**dass** zumindest der erste Farbanteil des Bildes punktweise einen ersten Farbwert und zumindest der zweite Farbanteil des Bildes punktweise einen zweiten Farbwert annehmen kann, wobei die Farbwerte jeweils unterschiedliche Ausprägungen, wie zumindest dunkel oder hell, annehmen können.

12. Verfahren nach Anspruch 11,
**dadurch gekennzeichnet,**
**dass** eine mittels der Gestaltdetektion in dem Bild aufgefundene lokale Form (96) den ersten Farbwert mit einer ersten Ausprägung, wie dunkel oder hell, und den zweiten Farbwert mit einer zweiten Ausprägung, wie dunkel oder hell, aufweist.

13. Verfahren nach Anspruch 11 oder 12,
**dadurch gekennzeichnet,**
**dass** aus der Kombination des ersten und des zweiten Farbwertes einer lokalen Form (96) Rückschlüsse auf die charakteristischen Eigenschaften der bewegten, Fasern beinhaltenden Bahn (4), ziehbar sind.

14. Verfahren nach einem der Ansprüche 1 bis 13,
**dadurch gekennzeichnet,**
**dass** zusätzlich ein drittes Licht (56) mit einer dritten, von der ersten und der zweiten unterschiedlichen Farbe (80), wie ein Grün, mit der Fasern beinhaltenden Bahn (4) in Wechselwirkung tritt, diese vorzugsweise in der Art einer Streiflichtbeleuchtung streift, wodurch lokale Topographieunterschiede der Fasern beinhaltenden Bahn (4), wie Rakelstreifen, Siebmarkierungen, Narbigkeit, detektierbar sind.

15. Verfahren nach einem der Ansprüche 8 bis 14,
**dadurch gekennzeichnet,**
**dass** der Einfluss eines nicht von der mindestens einen Lichtquelle (16, 20, 24) emittierten Hintergrundlichtes auf das Bild, vorzugsweise mit Hilfe von Referenzbildern, kompensierbar ist.

16. Verfahren nach einem der Ansprüche 8 bis 15,
**dadurch gekennzeichnet,**
**dass** in der Bildanalyse die Farbe der Fasern beinhaltenden Bahn (4) berücksichtigt wird, welche vorzugsweise während einer Wechselwirkung der Fasern beinhaltenden Bahn (4) mit einem Licht, wie dem ersten, zweiten, dritten Licht (48, 52, 56) oder wie, optional zusätzlich, einem UV-Licht, vorzugsweise vor verschiedenfarbigen Hintergründen, ermittelt wurde.

17. Messvorrichtung (1) zur optischen Erfassung und Auswertung von charakteristischen Eigenschaften, wie Störungen im Erscheinungsbild, einer bewegten, Fasern, wie Zellstofffasern, beinhaltenden Bahn (4) mit zumindest den folgenden Komponenten: einer Lichtquelle (16, 20, 24) und einem ein Bildsignal (60) generierenden lichtempfindlichen Sensor (12, 13, 14), wie einer Bildkamera, und ein Auswertesystem (28),
**dadurch gekennzeichnet,**
**dass** die Messvorrichtung (1) das Verfahren nach einem der Ansprüche 1 bis 16 realisiert.

18. Messvorrichtung nach Anspruch 17,
**dadurch gekennzeichnet,**
**dass** ein erstes und ein zweites, von dem ersten unstörbares, verfahrensgemäßes Messsystem (2, 3) und ein erstes und ein zweites Auswertesystem (28, 29) vorhanden sind, wobei das erste Messsystem (2) im Zusammenwirken mit dem ersten Auswertesystem (28) charakteristische Eigenschaften der Oberseite der Fasern beinhaltenden Bahn (4) und das zweite Messsystem (3) im Zusammenwirken mit dem zweiten Auswertesystem (29) charakteristische Eigenschaften der Unterseite der Fasern beinhaltenden Bahn (4) erfassen und ermitteln.

19. Messvorrichtung nach Anspruch 17 oder 18,
**dadurch gekennzeichnet,**
**dass** das Auswertesystem (28, 29) die charakteristischen Eigenschaften der Fasern beinhaltenden Bahn (4) im Zusammenwirken mit dem Messsystem (2, 3) in Echtzeit, d. h. so schnell ermittelt, dass mit Hilfe einer Rückkoppelung von die charakteristischen Eigenschaften abbildenden physikalischen Größen, wie einem elektrischen Strom oder einer elektrischen Spannung, Störungen im Erscheinungsbild der Fasern beinhaltenden Bahn (4) ausregelbar sind.
